# FASCICULE DE BREVET EUROPEEN

(11) **EP 0 574 285 B1**
(45) Date de publication et mention de la délivrance du brevet: **25.11.1998**
(21) Numéro de dépôt: 93401351.7
(22) Date de dépôt: 27.05.1993
(51) Int. Cl.: C01B 3/56, C01B 3/50, C01B 3/02, B01D 53/22, B01D 53/04, C01C 1/04

(54) **Procédé et installation de production combinée d'ammoniac de synthèse et d'hydrogène pur**
Verfahren und Vorrichtung zur kombinierten Herstellung von synthetischen Ammoniak und reinem Wasserstoff
Process and apparatus for the combined production of synthetic ammonia and pure hydrogen

(30) Priorité: 10.06.1992 FR 9206956
(43) Date de publication de la demande: 15.12.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Fuentes, François, F-75013 Paris (FR)
(74) Mandataire: Le Moenner, Gabriel

(56) Documents cités:
- EP-A- 0 092 969
- EP-A- 0 241 313
- EP-A- 0 266 745
- P.J. VAN DEN BERG, W.A. DE JONG 'Introduction to Chemical Process Technology' 1983 , DELFT UNIVERSITY PRESS , DELFT, HOLLAND

## Description

La présente invention concerne la production combinée d'ammoniac de synthèse et d'hydrogène pur, à partir d'un gaz à base d'hydrocarbures, notamment méthane. A cet effet, on procède généralement à la succession des opérations suivantes :
a) un réformage en au moins deux étapes, dont une dernière étape avec introduction d'air, élaborant, à partir dudit gaz à base d'hydrocarbures et d'air de réformage, un mélange gazeux composite incorporant essentiellement de l'azote et de l'hydrogène, de faibles proportions de gaz carbonique, de vapeur d'eau, et de monoxyde de carbone, et des traces d'argon et de méthane ;
b) une élimination substantielle du monoxyde de carbone par transformation en gaz carbonique, ne laissant subsister que des traces de monoxyde de carbone ;
c) un procédé d'élimination du gaz carbonique, ne laissant subsister que des traces de gaz carbonique ;
d) une méthanisation substantielle du monoxyde de carbone réduisant à un niveau infime les traces du monoxyde de carbone, et produisant du méthane ;
e) éventuellement un séchage éliminant la vapeur d'eau ;
le tout de façon à élaborer un gaz de synthèse d'ammoniac (NH₃) constitué d'hydrogène (H₂) (teneur de l'ordre de 74-75 %), d'azote (N₂) (teneur de l'ordre de 24-25 %), d'argon (Ar) et de méthane (CH₄) (teneur globale de l'ordre de 1 %).

On a profité parfois de l'existence d'une installation de production d'ammoniac, qui traite des débits extrêmement importants de gaz de synthèse, pour soutirer un débit modéré de gaz de synthèse, afin d'élaborer de l'hydrogène et, à cet effet, tandis qu'on comprime en plusieurs étages de compression le gaz de synthèse pour l'envoyer à un réacteur de synthèse d'ammoniac pour produire le débit d'ammoniac de synthèse, on prélève, entre deux étages de compression, un débit de soutirage relativement faible de gaz de synthèse sous moyenne pression, on sépare substantiellement l'hydrogène des autres constituants : azote, argon, méthane, pour produire un débit d'hydrogène aussi pur que possible, ladite séparation s'effectuant généralement par perméation délivrant substantiellement sous ladite moyenne pression, un effluent constitué essentiellement d'hydrogène et d'azote avec substantiellement tout l'argon et tout le méthane, effluent que l'on renvoie aux gaz de synthèse d'ammoniac sous moyenne pression et un gaz perméat sous plus faible pression constitué essentiellement d'hydrogène avec une faible teneur en azote et des traces d'argon, de méthane et éventuellement de vapeur d'eau. On a également proposé d'effectuer ladite séparation par adsorption sur tamis moléculaire selon le procédé à variation cyclique de pression, dit "pressure swing adsorption" ou PSA, délivrant d'une part, sous pression moyenne, un gaz de production constitué essentiellement d'hydrogène avec des traces d'argon et des traces d'azote, de méthane et éventuellement de vapeur d'eau, d'autre part, sous une pression plus basse, un gaz résiduaire à teneur élevée en hydrogène, à teneur substantielle en azote, et à teneurs faibles en argon, méthane et éventuellement vapeur d'eau.

Par ces procédés, on est ainsi confronté soit à une qualité mauvaise d'hydrogène produit, soit à de mauvais rendements énergétiques, puisque l'azote, qui se retrouve dans le gaz résiduaire à basse pression, doit être recomprimé à la pression de soutirage du gaz de synthèse. D'autre part, et ceci est particulièrement vrai dans le procédé d'adsorption, ce procédé conduit à de mauvaises performances de l'installation de production d'hydrogène du fait de la reprise de quantités notables d'argon qui est faiblement adsorbable.

La présente invention a pour objet un procédé de production d'hydrogène à haute pureté à partir d'un gaz de synthèse d'ammoniac, tout en limitant les quantités d'azote et d'hydrogène qui se retrouvent à pression basse, et qui doivent être soit recomprimées, soit purgées vers l'extérieur, et ces objectifs sont atteints selon l'invention, en ce que l'étape de production d'hydrogène pur comporte au moins deux sous-étapes de purification, à savoir :
- une sous-étape initiale de perméation délivrant substantiellement sous ladite moyenne pression un effluent constitué essentiellement d'hydrogène et d'azote avec substantiellement tout l'argon et tout le méthane, effluent que l'on renvoie au gaz de synthèse d'ammoniac ; et un gaz perméat sous plus faible pression constitué essentiellement d'hydrogène avec une faible teneur en azote et des traces d'argon, de méthane et éventuellement de vapeur d'eau ;
- une sous-étape finale d'adsorption du gaz perméat par adsorption sur tamis moléculaires, selon le procédé à variation cyclique de pression dit "pressure swing adsorption" ou PSA délivrant, d'une part, sous ladite plus faible pression, un gaz de production constitué essentiellement d'hydrogène avec des traces d'argon de l'ordre de, ou inférieures à, 100 ppm, et des traces d'azote, de méthane et éventuellement de vapeur d'eau, chacune à une teneur de l'ordre de, ou inférieure à, 1 ppm, d'autre part, sous une pression encore plus basse, un gaz résiduaire à teneur élevée en hydrogène, à teneur substantielle en azote, et à teneurs faibles en argon, méthane et éventuellement vapeur d'eau.

De la sorte, à la suite de la séparation préalable par perméation, on dispose, à une pression voisine de la pression de soutirage, un mélange gazeux à fortes teneurs en hydrogène et azote, qu'on renvoie sans difficulté au gaz de synthèse, avec une dépense énergétique minimale.

L'unité d'adsorption qui succède se contente alors de traiter un mélange gazeux à très forte teneur en hydrogène et contenant seulement une faible teneur en azote, ce qui facilite l'opération. En outre, le gaz résiduaire issu de l'adsorption, qui est encore riche en hydrogène, peut être recyclé au gaz perméat, avant traitement par adsorption.

L'invention concerne également une installation de production combiné d'ammoniac de synthèse et d'hydrogène pur, mettant en oeuvre le procédé ci-dessus.

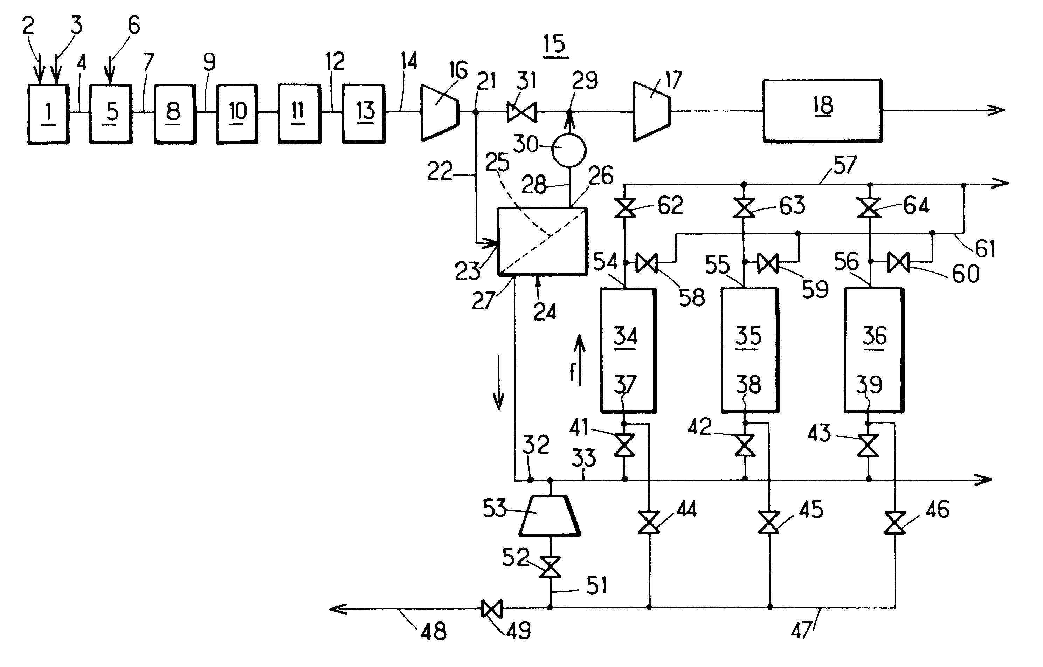

Les caractéristiques et avantages de l'invention ressortiront d'ailleurs de la description qui suit, à titre d'exemple, en référence au dessin annexé qui est un schéma d'une installation.

Selon le dessin, une installation comporte une unité de réformage primaire 1, alimentée en 2 par un gaz naturel (essentiellement du méthane) et en 3 en vapeur d'eau, produisant un mélange gazeux (H₂, CH₄, CO, CO₂, H₂O) qui est ensuite envoyé par le conduit 4 à une unité de réformage secondaire 5, à laquelle est admis de l'air en 6, et d'où sort en 7 un mélange gazeux (N₂, H₂, CO, CO₂, H₂O) avec des traces de méthane CH₄ et d'argon Ar, qui est ensuite traité par un lavage 8 éliminant l'essentiel du CO, de sorte que le mélange gazeux en 9 ne comporte, outre N₂ et H₂, que de faibles proportions de CO₂ et H₂O et des traces de CH₄, Ar et CO. On procède en 10 au retrait substantiel de CO₂, de sorte que le mélange comporte alors seulement, outre N₂, H₂, H₂O, des traces de CH₄, Ar, CO et CO₂. En 11, on procède à la méthanisation de CO, si bien qu'en 12 ne subsistent que de faibles traces de CO, CO₂, Ar et CH₄ (Ar + CH₄ de l'ordre de 1 %). On obtient un gaz de synthèse H₂ de l'ordre de 74 % ; N₂ de l'ordre de 25 % ; Ar + CH₄ + H₂O de l'ordre de 1 %. Pour améliorer le ratio H₂:N₂, on peut ajouter des moyens de réglage de l'opération de réformage, comme décrit ci-après.

Ce mélange est envoyé en 15 à un compresseur à plusieurs étages 16 et 17, puis au réacteur de synthèse 18 produisant un débit d'ammoniac NH₃.

Entre les deux étages de compression 16 et 17, en un point amont 21, on soutire un débit modéré de mélange de synthèse, que l'on conduit par 22 à une entrée 23 d'une unité de perméation 24 à membrane 25, présentant une sortie 26 du gaz n'ayant pas perméé, donc pratiquement à la même pression moyenne qu'à l'entrée 23, et une sortie 27 de gaz perméat à plus faible pression. Le gaz non perméat issu de 26 est renvoyé par 28 en un point de recyclage 29, situé à l'aval du point de soutirage 21. On prévoit soit un compresseur 30 sur le conduit 28, soit un dispositif déprimogène 31 entre les points de soutirage 21 et de recyclage 29, afin d'assurer la circulation gazeuse au travers de l'unité de perméation 24.

Le gaz perméat issu de 27 est véhiculé en 32 à une conduite d'alimentation dite sous pression 33 (en fait la "faible" pression du gaz perméat de l'unité de perméation 24) d'une installation d'adsorption à plusieurs adsorbeurs (trois adsorbeurs sont ici représentés à titre d'exemple en 34, 35, 36) présentant chacun une "entrée" 37, 38, 39 raccordée, d'une part, par vannes 41, 42, 43 à la conduite d'alimentation 33, d'autre part, par vannes 44, 45, 46 à une conduite de gaz résiduaires 47, elle-même raccordée, d'une part, à une conduite de purge 48 à vanne 49, d'autre part, à une conduite de recyclage 51 à vanne 52 et compresseur 53.

Une "sortie" aval 54, 55, 56 (selon le sens co-courant f) débouche, d'une part, via des vannes 62, 63, 64 dans une conduite de protection 57, d'autre part, via des vannes 58, 59, 60 dans une conduite de gaz d'élution et de repressurisation finale 61, raccordée à la conduite de production 57.

L'installation décrite traite donc d'abord une partie du mélange gazeux de synthèse conduit en 22 dans l'unité de perméation permettant de renvoyer via 28 un gaz à fortes teneurs en N₂ et H₂ pratiquement sous la moyenne pression de soutirage. Le gaz perméat sous faible pression en 33 a une teneur très élevée, de l'ordre de 95 % en H₂, le reste étant essentiellement de l'azote (1 à 2 %) et des traces d'argon, de méthane et de vapeur d'eau. A l'entrée (37, 38, 39) de l'unité d'adsorption (34, 35, 36) fonctionnant de façon cyclique, l'un des adsorbeurs (34) est en production isobare selon le sens de circulation f (dit co-courant), le second (35) d'abord en dépressurisation (à co-courant d'équilibrage via 59, 60 puis en contre-courant de purge via 45, 47, 49, 48), puis en élution à contre-courant (via 59, 45) et recyclage via 51, 52, 53, alors que le troisième adsorbant 36 est en cours de repressurisation (équilibrage avec 35, via 59 et 60, puis finalement avec le gaz de production via 60). Il y a lieu de noter qu'on a décrit un cercle simplifié et qu'on peut utiliser des cycles nettement plus élaborés avec un plus grand nombre d'adsorbeurs, qui permettent de délivrer (en 57) un gaz de production hydrogène très pur (à 99,99 %) avec des traces d'azote (N₂) inférieures à 1 ppm, d'argon (Ar) inférieures à 100 ppm, de méthane (CH₄) inférieures à 1 ppm, et de vapeur d'eau (H₂O) inférieures à 1 ppm. Le gaz purgé en 48 a des teneurs élevées en H₂ et N₂ et de faibles teneurs en Ar, CH₄, H₂O. Celui qui est recyclé en 51, 52, 53, et qui provient de l'élution d'un adsorbeur sous basse pression, présente généralement une teneur plus élevée en hydrogène.

A titre d'exemple on note ci-après les résultats obtenus selon le procédé de l'invention, avec un procédé ne différenciant pas les gaz résiduaires de décompression finale et d'élution.

De préférence, on modifie les paramètres de réglage de l'opération de réformage de manière à augmenter le ratio H₂:N₂ en entrée des étages de compression 14, afin de retrouver le ratio optimal dans le réacteur de synthèse. De manière préférée, le ratio H₂:N₂ en entrée des étages de compression 14 est supérieur à 3:1.

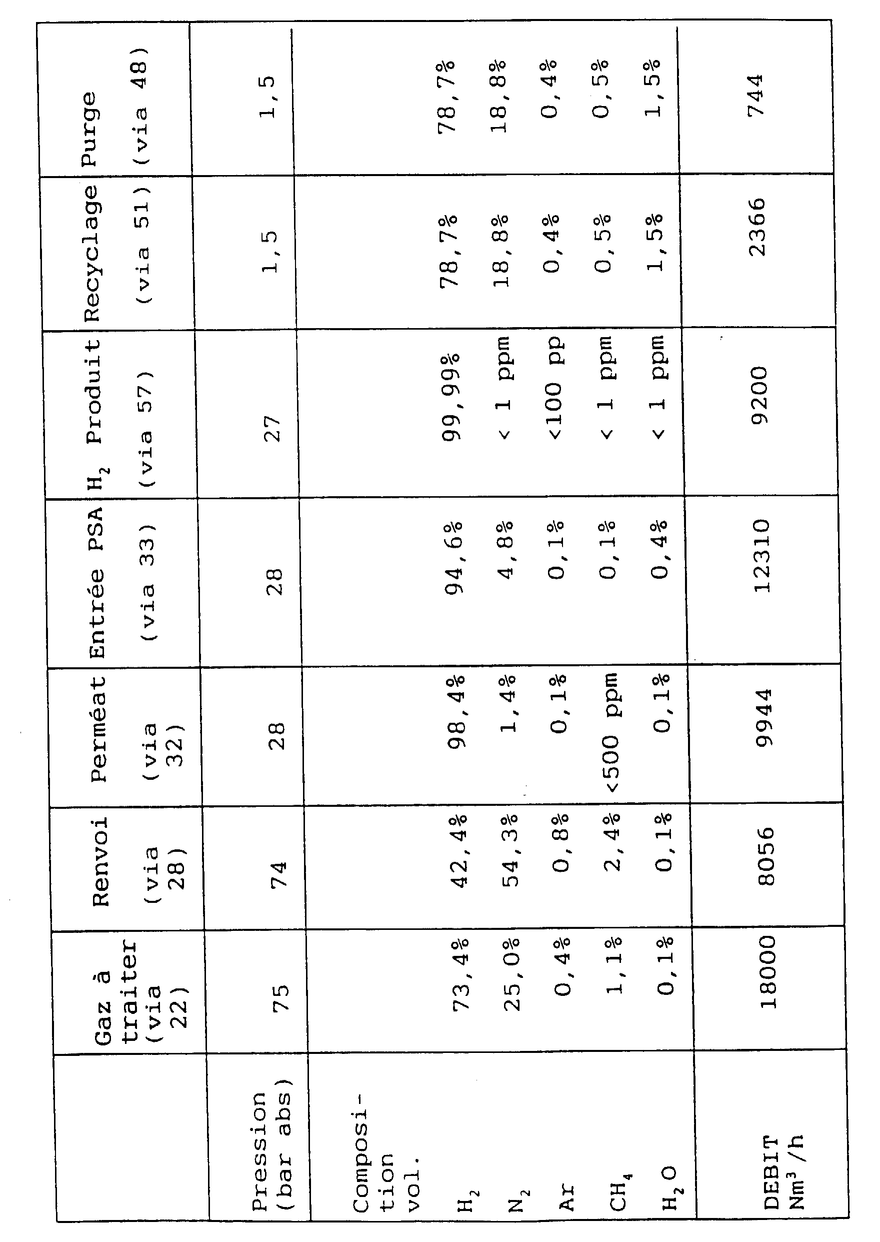

## Revendications

1. Procédé de production combinée d'ammoniac de synthèse (NH₃) et d'hydrogène pur (H₂), à partir d'un gaz à base d'hydrocarbures (2), notamment méthane, que l'on soumet aux opérations suivantes
a) un réformage en au moins deux étapes (1) (5), dont une dernière étape (5) avec introduction d'air (6), élaborant à partir dudit gaz à base d'hydrocarbures et d'air de réformage, un mélange gazeux composite (7) incorporant essentiellement de l'azote (N₂) et de l'hydrogène (H₂), de faibles proportions de gaz carbonique (CO₂) de vapeur d'eau (H₂O), et de monoxyde de carbone (CO), d'argon (Ar) et de méthane (CH₄) ;
b) une élimination substantielle (8) du monoxyde de carbone (CO) par transformation en gaz carbonique (CO₂) ne laissant subsister (en 9) que des traces de monoxyde de carbone (CO), de gaz carbonique (CO₂) et de méthane (CH₄) ;
c) un procédé d'élimination (10) du gaz carbonique, ne laissant subsister que des traces de gaz carbonique ;
d) une méthanisation substantielle du monoxyde de carbone (11) réduisant encore (en 12) la teneur des traces du monoxyde de carbone (CO), et produisant des traces de méthane (CH₄)
e) éventuellement un séchage (13) éliminant la vapeur d'eau,
le tout de façon à élaborer (en 14) un gaz de synthèse d'ammoniac constitué d'hydrogène (teneur de l'ordre de 74-75 %), d'azote (teneur de l'ordre de 24-25 %), d'argon et de méthane (teneur globale de l'ordre de 1 %),
après quoi :
f) on comprime (15) en plusieurs étages de compression (16, 17) le gaz de synthèse pour l'envoyer à un réacteur de synthèse d'ammoniac (18) pour produire le débit d'ammoniac de synthèse (NH₃) ;
g) on prélève (21), entre deux étages de compression (16) et (17), un débit de soutirage relativement faible de gaz de synthèse sous moyenne pression (22), on sépare substantiellement l'hydrogène des autres constituants : azote, argon,méthane, pour produire un débit gazeux à teneur élevée en hydrogène H₂ (57),
caractérisé en ce que l'étape g) de production d'hydrogène comporte au moins deux sous-étapes de purification, à savoir :
g₁) une sous-étape initiale de perméation (24) délivrant substantiellement sous ladite moyenne pression un effluent (28) constitué essentiellement d'hydrogène et d'azote avec substantiellement tout l'argon et tout le méthane, effluent que l'on renvoie (en 29) au gaz de synthèse d'ammoniac ; et un gaz perméat (32) sous plus faible pression constitué essentiellement d'hydrogène avec une faible teneur en azote et des traces d'argon, de méthane et éventuellement de vapeur d'eau ;
g₂) une sous-étape initiale d'adsorption (34, 35, 36) du gaz perméat (32) sur tamis moléculaires, du genre à variation cyclique de pression, dit "pressure swing adsorption" ou PSA délivrant, d'une part, sous ladite plus faible pression (en 57), un gaz de production constitué d'hydrogène avec seulement des traces d'argon de l'ordre de, ou inférieures à, 100 ppm, et des traces d'azote, de méthane et de vapeur d'eau, chacun à une teneur de l'ordre de, ou inférieure à, 1 ppm, d'autre part, sous une pression encore plus basse, un gaz résiduaire (en 47) à teneur élevée en hydrogène, à teneur substantielle en azote, et à teneurs faibles en argon, méthane et vapeur d'eau.

2. Procédé de production combinée d'ammoniac de synthèse et d'hydrogène pur, selon la revendication 1, caractérisé en ce que l'on renvoie (51, 52), après recompression (53), une partie du gaz résiduaire au gaz perméat (32).

3. Procédé de production combinée d'ammoniac de synthèse et d'hydrogène pur, selon la revendication 2, du genre où l'étape d'adsorption sur tamis moléculaires (34) (35) (36) incorpore, cycliquement, sur chaque tamis moléculaire, une étape de régénération dudit tamis moléculaire avec dépressurisation comprenant une phase terminale à contre-courant (par rapport au sens d'adsorption (f) dit à co-courant) suivie d'une phase de régénération finale avec élution à contre-courant avec du gaz à teneur substantielle en hydrogène, qui est de préférence une partie du gaz de production ou du gaz de première dépressurisation, caractérisé en ce que la partie du gaz résiduaire (47) renvoyé (via 51) au gaz perméat (32) est exclusivement le gaz issu de l'élution, alors que l'on procède à une purge (48) du gaz de la dépressurisation finale à contre-courant.

4. Procédé de production combinée d'ammoniac de synthèse et d'hydrogène pur, selon l'une des revendications précédentes, caractérisé en ce que l'on modifie les paramètres de réglage de l'opération de réformage de manière à augmenter le ratio H₂:N₂ en entrée des étages de compression (14) afin de retrouver le ratio optimal dans le réacteur de synthèse.

5. Procédé de production combinée d'ammoniac de synthèse et d'hydrogène pur, selon la revendication 4, caractérisé en ce que le ratio H₂:N₂ en entrée des étages de compression (14) est supérieur à 3:1.

6. Installation de production combinée d'ammoniac de synthèse et d'hydrogène pur, du genre comprenant :
a) une unité de réformage (1) (5), en au moins deux étapes, dont une dernière étape (5) avec introduction d'air (6), élaborant à partir dudit gaz à base d'hydrocarbures et d'air de réformage, un mélange gazeux composite incorporant essentiellement de l'azote et de l'hydrogène, de faibles proportions de gaz carbonique, de vapeur d'eau, et de monoxyde de carbone, d'argon et de méthane ;
b) une unité d'élimination (8) substantielle du monoxyde de carbone par transformation en gaz carbonique ne laissant subsister que des traces de monoxyde de carbone, de gaz carbonique et de méthane ;
c) une unité (10) d'élimination du gaz carbonique, ne laissant subsister que des traces de gaz carbonique ;
d) une unité de méthanisation (11) du monoxyde de carbone réduisant encore la teneur des traces du monoxyde de carbone, et produisant du méthane ;
e) éventuellement une unité de séchage (13) éliminant la vapeur d'eau,
f) un moyen de compression (15) en plusieurs étages de compression (16-17) du gaz de synthèse pour l'envoyer à un réacteur (18) de synthèse d'ammoniac pour produire le débit d'ammoniac de synthèse ;
g) une unité de séparation gazeuse (24) (34, 35, 36) opérant sur un débit de soutirage (22) entre deux étages (16) (17) du moyen de compression (15) selon f) et apte à séparer substantiellement l'hydrogène des autres constituants gazeux : azote, argon,méthane ;
caractérisé en ce que l'unité de séparation gazeuse selon g) comprend
g₁) une unité de perméation gazeuse (24), avec d'une part un compartiment sous pression présentant une entrée (23) raccordée au conduit de gaz de synthèse en aval d'un étage (16) dudit moyen de compression (15) selon f), et une sortie (26) raccordée (en 29) audit conduit de gaz de synthèse, en aval du point de raccordement (21) de ladite entrée (23), avec agencement d'un moyen de circulation gazeuse (30 ou 31) et, d'autre part, un compartiment de perméation sous plus faible pression, avec une sortie (27) de perméat ;
g₂) une unité d'adsorption avec tamis moléculaires (34, 35, 36), chacun raccordé successivement :
- par une "entrée" (37) (38) (39) à co-courant avec un conduit (33) véhiculant un mélange gazeux comprenant le perméat (32) de l'unité de perméation (24) ;
- par une "sortie" à contre-courant (37) (38) (39) avec un conduit de gaz résiduaires (47).

7. Installation de production combinée d'ammoniac de synthèse et d'hydrogène pur selon la revendication 6, caractérisée par un conduit de recyclage (51) entre le conduit de gaz résiduaires (47), incorporant un compresseur de recyclage (53) et le conduit d'alimentation (33) de l'unité d'adsorption (34) (35) (36).

8. Installation de production combinée d'ammoniac de synthèse et d'hydrogène pur, selon l'une des revendications précédentes, caractérisée par des moyens de réglage de l'opération de réformage, permettant d'augmenter le ratio H₂:N₂ en entrée des étages de compression (14) afin de retrouver le ratio optimal dans le réacteur de synthèse .

9. Installation de production combinée d'ammoniac de synthèse et d'hydrogène pur, selon la revendication 8, caractérisée en ce que les moyens de réglage permettent d'augmenter le ratio H₂:N₂ au-dessus de 3:1.

## Patentansprüche

1. Verfahren zur kombinierten Herstellung von Syntheseammoniak (NH₃) und reinem Wasserstoff (H₂), ausgehend von einem auf Kohlenwasserstoffen (2), insbesondere Methan, basierenden Gas, das folgenden Arbeitsschritten unterzogen wird:
a) eine Umsetzung in mindestens zwei Schritten (1) (5), darunter ein letzter Schritt (5), bei dem Luft eingeleitet wird (6), wobei ausgehend von dem auf Kohlenwasserstoffen basierenden Gas und Umsetzungsluft ein zusammengesetztes Gasgemisch (7) entsteht, das im wesentlichen Stickstoff (N₂) und Wasserstoff (H2), geringe Anteile von Kohlendioxid (CO₂), Wasserdampf (H₂O) sowie Kohlenmonoxid (CO), Argon (Ar) und Methan (CH₄) enthält;
b) eine weitgehende Entfernung (8) des Kohlenmonoxids (CO) durch Überführung in Kohlendioxid (CO₂), wobei nur Spuren von Kohlenmonoxid (CO) sowie Kohlendioxid (CO₂) und Methan (CH₄) zurückbleiben;
c) eine Entfernung (10) des Kohlendioxids, wobei nur Spuren von Kohlendioxid zurückbleiben;
d) eine weitgehende Methanisierung des Kohlenmonoxids (11), wobei (bei 12) der Gehalt an Kohlenmonoxidspuren (CO) weiter verringert und Spuren von Methan (CH₄) erzeugt werden;
e) gegebenenfalls eine Trocknung (13), bei der der Wasserdampf entfernt wird,
das Ganze, um (bei 14) ein Ammoniaksynthesegas zu erzeugen, das aus Wasserstoff (Gehalt ungefähr 74 bis 75 %), Stickstoff (Gehalt ungefähr 24 bis 25 %), Argon und Methan (Gesamtgehalt ungefähr 1 %) besteht,
wonach:
f) in mehreren Verdichtungsstufen (16, 17) das Synthesegas verdichtet wird (15), um dieses zur Erzeugung des Syntheseammoniakstroms (NH₃) in einen Ammoniaksynthesereaktor (18) einzuleiten;
g) zwischen zwei Verdichtungsstufen (16) und (17) ein relativ schwacher Entnahmestrom an Synthesegas unter mittlerem Druck (22) entnommen (21) und Wasserstoff weitgehend von den anderen Bestandteilen Stickstoff, Argon und Methan getrennt wird, um einen Gasstrom mit hohem Gehalt an Wasserstoff H₂ zu erzeugen (57),
**dadurch gekennzeichnet**, daß der Schritt g) zur Produktion von Wasserstoff mindestens zwei Reinigungsschritte umfaßt, nämlich:
g₁) einen anfänglichen Permeationsschritt (24), der im wesentlichen unter dem mittleren Druck ein Fluid (28), das im wesentlichen aus Wasserstoff und Stickstoff mit nahezu dem gesamten Argon und dem gesamten Methan besteht, welches Fluid (in 29) dem Ammoniaksynthesegas zugegeben wird, und ein Gaspermeat (32) unter geringerem Druck liefert, das im wesentlichen aus Wasserstoff mit einem geringen Gehalt an Stickstoff und Spuren von Argon, Methan und ggfs. Wasserdampf besteht;
g₂) einen anfänglichen Adsorptionsschritt (34, 35, 36) für das Gaspermeat (32) an Molekularsieben des Typs mit zyklischer Druckänderung, welcher Typ "pressure swing adsorption" oder PSA genannt wird, wobei einerseits unter dem geringeren Druck (in 57) ein Produktionsgas, das aus Wasserstoff mit nur Spuren von Argon in dem Bereich oder kleiner 100 ppm und Spuren von Stickstoff, Methan und Wasserdampf, jeweils mit einem Gehalt im Bereich oder unterhalb von 1 ppm, besteht, und andererseits unter einem noch geringeren Druck ein Restgas (in 47) mit hohem Wasserstoffgehalt, mit einem beträchtlichen Stickstoffgehalt und mit geringem Gehalt an Argon, Methan und Wasserdampf geliefert wird.

2. Verfahren zur kombinierten Herstellung von Syntheseammoniak und reinem Wasserstoff nach Anspruch 1, dadurch gekennzeichnet, daß ein Teil des Restgases nach einer Nachverdichtung (53) dem Gaspermeat (32) zugegeben wird (51, 52).

3. Verfahren zur gemeinsamen Herstellung von Syntheseammoniak und reinem Wasserstoff nach Anspruch 2 von dem Typ, bei dem der Adsorptionsschritt an Molekularsieben (34( (35) (36) zyklisch an jedem Molekularsieb einen Regenerationsschritt des Mokekularsiebs einschließlich Druckminderung umfaßt, welcher eine abschließende, gegenstromartige Phase (im Gegensatz zur gleichgerichteten Adsorptionsrichtung (f)) umfaßt, die von einer abschließenden Regenerationsphase mit Elution gefolgt wird, die im Gegenstrom zu dem Gas mit beträchtlichem Wasserstoffgehalt steht, das vorzugsweise ein Teil des Produktionsgases oder des Gases einer ersten Druckminderung ist, dadurch gekennzeichnet, daß der Teil des Restgases (57), der (über 51) dem Gaspermeat (32) zugegeben wird, ausschließlich das aus der Elution stammende Gas ist, während mit einer Entnahme (48) des Gases der abschließenden Druckminderung im Gegenstrom fortgefahren wird.

4. Verfahren zur kombinierten Herstellung von Syntheseammoniak und reinem Wasserstoff nach einem der vorstehenden Ansprüche, dadurch gekennzeichnet, daß die Steuerparamter der Umsetzung so geändert werden, daß sich das Verhältnis H₂:N₂ am Einlaß der Verdichtungsstufen (14) erhöht, um das optimale Verhältnis in dem Synthesereaktor wiederherzustellen.

5. Verfahren zur kombinierten Herstellung von Syntheseammoniak und reinem Wasserstoff nach Anspruch 4, dadurch gekennzeichnet, daß das Verhältnis H₂:N₂ am Einlaß der Verdichtungsstufen (14) größer als 3:1 ist.

6. Vorrichtung zur kombinierten Herstellung von Syntheseammoniak und reinem Wasserstoff, umfassend:
a) eine Einheit zur Umsetzung (1) (5) in mindestens zwei Schritten, darunter ein erster Schritt (5), bei dem Luft eingeleitet wird (6), welche Einheit ausgehend von dem auf Kohlenwasserstoff basierenden Gas und Umsetzungsluft ein zusammengesetztes Gasgemisch erzeugt, das im wesentlichen Stickstoff und Wasserstoff, geringe Verhälnisses von Kohlendioxid zu Wasserdampf sowie Kohlenmonoxid, Argon und Methan enthält;
b) eine Einheit (8) zur weitgehenden Entfernung von Kohlenmonoxid durch Umwandlung in Kohlendioxid, die nur Spuren von Kohlenmonoxid sowie Kohlendioxid und Methan zurückläßt;
c) eine Einheit (10) zur Entfernung von Kohlendioxid, die nur Spuren von Kohlendioxid zurückläßt;
d) eine Einheit (11) zur Methanisierung des Kohlendioxids, die den Gehalt an Kohlenmonoxidspuren weiter verringert und Methan erzeugt;
e) gegebenenfalls eine Trockeneinheit (13), die den Wasserdampf entfernt;
f) ein Mittel (15) zur Verdichtung des Synthesegases in mehreren Verdichtungsstufen (16 bis 17), um dieses zur Erzeugung des Syntheseammoniakstroms in einen Ammoniaksynthesereaktor (18) einzuleiten;
g) eine Einheit (24) zur Gastrennung (34, 35, 36), die zwischen zwei Stufen (16) (17) des Verdichtungsmittels (15) nach f) auf einen Abgabestrom (22) wirkt und geeignet ist, Wasserstoff weitgehend von den anderen Gasbestandteilen Stickstoff, Argon und Methan zu trennen;
dadurch gekennzeichnet, daß die Einheit zur Gastrennung nach g) umfaßt:
g₁) eine Gaspermeationseinheit (24) mit einerseits einem unter Druck stehenden Bereich, der einen Einlaß (23), der stromab einer Stufe (16) des Verdichtungsmittels (15) nach f) mit der Synthesegasleitung verbunden ist, und einen Auslaß (26) aufweist, der (bei 29) stromab des Anschlußpunkts (21) des Einlasses (23) mit der Synthesegasleitung verbunden ist, mit Vorrichtungen für ein Gaszirkulationsmittel (30 oder 31), und andererseits einem unter geringerem Druck stehenden Permeationsbereich mit einem Permeatauslaß (27);
g₂) eine Adsorptionseinheit mit Molekularsieben (34, 35, 36), die jeweils folgendermaßen verbunden sind:
- über einen "Einlaß" (37) (38) (39) im Gleichstrom mit einer Leitung (33), die ein Gasgemisch, das das Permeat (32) aus der Permeationseinheit (24) umfaßt, befördert;
- über einen "Auslaß" im Gegenstrom (37) (38) (39) mit einer Restgasleitung (47).

7. Vorrichtung zur kombinierten Herstellung von Syntheseammoniak und reinem Wasserstoff nach Anspruch 6, gekennzeichnet durch eine Rückführleitung (51) zwischen der einen Rückführverdichter (53) umfassenden Restgasleitung (47) und der Versorgungsleitung (33) der Adsorptionseinheit (34) (35) (36).

8. Vorrichtung zur kombinierten Herstellung von Syntheseammoniak und reinem Wasserstoff nach einem der vorstehenden Ansprüche, gekennzeichnet durch Mittel zur Steuerung der Reformierung, die ermöglichen, das Verhältnis H₂:N₂ am Einlaß der Verdichtungsstufen (14) zu erhöhen, um das optimale Verhältnis in dem Synthesereaktor wiederherzustellen.

9. Vorrichtung zur gemeinsamen Herstellung von Syntheseammoniak und reinem Wasserstoff nach Anspruch 8, dadurch gekennzeichnet, daß die Steuermittel ermöglichen, das Verhältnis H₂:N₂ auf einen Wert oberhalb von 3:1 zu erhöhen.

## Claims

1. Process for the combined production of synthetic ammonia (NH₃) and pure hydrogen (H₂) from a gas based on hydrocarbons (2), in particular methane, which is subjected to the following operations :
a) reforming in at least two stages (1) (5), the last stage (5) of which is with introduction of air (6), preparing from the said gas based on hydrocarbons and reforming air, a composite gaseous mixture (7) incorporating essentially nitrogen (N₂) and hydrogen (H₂), small proportions of carbon dioxide (CO₂), water vapour (H₂O) and carbon monoxide (CO), argon (Ar) and methane (CH₄);
b) substantial elimination (8) of carbon monoxide (CO) by conversion into carbon dioxide (CO₂) allowing (in 9) only traces of carbon monoxide (CO), carbon dioxide (CO₂) and methane (CH₄) to exist;
c) a process for eliminating (10) carbon dioxide, allowing only traces of carbon dioxide to exist;
d) substantial methanization of carbon monoxide (11) reducing still further (in 12) the trace concentration of carbon monoxide (CO) and producing traces of methane (CH₄);
e) where necessary, drying (13), eliminating water vapour,
all so as to produce (in 14) a gas for synthesizing ammonia consisting of hydrogen (concentration of the order of 74-75 %), nitrogen (concentration of the order of 24-25 %), argon and methane (overall concentration of the order of 1 %),
after which :
f) the synthesis gas is compressed (15) in several compression stages (16,17) to send it to a reactor for synthesizing ammonia (18) to produce the flow of synthetic ammonia (NH₃) ;
g) a relatively small draw-off flow of synthesis gas is bled off (21) under medium pressure (22) between two compression stages (16) and (17), hydrogen being substantially separated from the other constituents : nitrogen, argon, methane, to produce a gas flow with a high hydrogen H₂ content (57),
characterized in that the stage g) for producing hydrogen includes at least two purification sub-stages, namely :
g1) an initial permeation sub-stage (24) delivering substantially under the said medium pressure an effluent (28) consisting essentially of hydrogen and nitrogen with substantially all the argon and all the methane, an effluent which is returned (in 29) to the ammonia synthesis gas; and a permeate gas (32) under a lower pressure consisting essentially of hydrogen with a small nitrogen content and traces of argon, methane and possibly water vapour;
g2) an initial adsorption sub-stage (34, 35, 36) on the permeate gas (32) on molecular sieves, of the type with cyclical pressure variation, known as "pressure swing adsorption" or PSA, delivering, firstly under the said lower pressure (in 57), a production gas consisting of hydrogen with only traces of argon of the order of, or less than, 100 ppm, and traces of nitrogen, methane and water vapour, each at a concentration of the order of, or less than, 1 ppm, and secondly, under an even lower pressure, a residual gas (in 47) with a high hydrogen content, having a substantial nitrogen content and lower contents of argon, methane and water vapour.

2. Process for the combined production of synthetic ammonia and pure hydrogen, according to claim 1,
characterized in that part of the residual gas is returned (51, 52), after recompression (53), to the permeate gas (32).

3. Process for the combined production of synthetic ammonia and pure hydrogen, according to claim 2, of the type where the adsorption stage on molecular sieves (34) (35) (36) incorporates, cyclically, on each molecular sieve, a stage for the regeneration of the said molecular sieve with depressurization including a terminal phase in counter-current (in relation to the direction of adsorption (f), referred to as co-current) followed by a final regeneration phase with elution in counter-current with gas having a substantial hydrogen content, which is preferably part of the production gas or of the gas from the first depressurization, characterized in that the part of the residual gas (47) returned (via 51) to the permeate gas (32) is exclusively the gas resulting from the elution, whilst a purge (48) is carried out with the gas from the final counter-current depressurization.

4. Process for the combined production of synthetic ammonia and pure hydrogen according to one of the preceding claims characterized in that the parameters for adjusting the reforming operation are modified in such a way as to increase the H₂:N₂ ratio at the inlet to the compression stages (14) so as to find the optimum ratio in the synthesis reactor.

5. Process for the combined production of synthetic ammonia and pure hydrogen, according to claim 4,
characterized in that the H₂:N₂ ratio at the inlet to the compression stages (14) is greater than 3:1.

6. Installation for the combined production of synthetic ammonia and pure hydrogen, of the type comprising :
a) a reforming unit (1) (5), with at least two stages, the last stage (5) of which is with introduction of air (6), preparing from the said gas based on hydrocarbons and reforming air, a composite gaseous mixture incorporating essentially nitrogen and hydrogen, and small proportions of carbon dioxide, water vapour and carbon monoxide, argon and methane;
b) a unit for the substantial elimination (8) of carbon monoxide by conversion into carbon dioxide allowing only traces of carbon monoxide, carbon dioxide and methane to exist;
c) a unit (10) for eliminating carbon dioxide, allowing only traces of carbon dioxide to exist;
d) a unit for the methanization (11) of carbon monoxide reducing still further the trace concentration of carbon monoxide (CO) and producing methane ;
e) where necessary, a drying unit (13) eliminating water vapour,
f) a means of compressing (15) the synthesis gas in several compression stages (16-17) so as to convey it to a reactor (18) for synthesising ammonia to produce the flow of synthetic ammonia;
g) a gas separation unit (24) (34, 35, 36) operating on a flow withdrawn (22) between two stages (16) (17) of the means of compression (15) according to f) and able to separate hydrogen substantially from the other gaseous constituents : nitrogen, argon, methane;
characterized in that the gas separation unit according to g) comprises
g1) a gas permeation unit (24), with firstly a compartment under pressure having an inlet (23) connected to the synthesis gas conduit downstream from a stage (16) of the said means of compression (15) according to f), and an outlet (26) connected (at 29) to the said synthesis gas conduit, downstream from the point of connection (21) of the said inlet (23), with provision of means for circulating gases (30 or 31) and, secondly, a permeation compartment under a lower pressure, with a permeate outlet (27);
g2) an adsorption unit with molecular sieves (34,35,36), each connected successively:
- by a counter-current "inlet" (37) (38) (39) with a conduit (33) conveying a gaseous mixture comprising the permeate (32) from the permeation unit (24);
- by a counter-current "outlet" (37) (38) (39) with a residual gas conduit (47).

7. Installation for the combined production of synthetic ammonia and pure hydrogen according to claim 6,
characterized by a recycling conduit (51) between the residual gas conduit (47), incorporating a recycling compressor (53) and the supply conduit (33) of the adsorption unit (34) (35) (36).

8. Installation for the combined production of synthetic ammonia and pure hydrogen, according to one of the preceding claims, characterized by means for adjusting the reforming operation, enabling the H₂:N₂ ratio to be increased at the inlet of the compression stages (14) so as to find the optimum ratio in the synthesis reactor.

9. Installation for the combined production of synthetic ammonia and pure hydrogen according to claim 8,
characterized in that the means of adjustment enable the H₂:N₂ ratio to be increased above 3:1.
